Europäisches Patentamt

European Patent Office

Office européen des brevets

(19)

(11) **EP 1 018 833 A2**

(12) **EUROPEAN PATENT APPLICATION**

(43) Date of publication:
**12.07.2000 Bulletin 2000/28**

(51) Int Cl.⁷: **H04N 1/32**

(21) Application number: **99309133.9**

(22) Date of filing: **17.11.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **07.01.1999 GB 9900191**

(71) Applicant: **Hewlett-Packard Company**
**Palo Alto, California 94304 (US)**

(72) Inventor: **Brandt, Soren**
**Didcot, Oxon OX11 8EP (GB)**

(74) Representative:
**Lawrence, Richard Anthony et al**
**Hewlett-Packard Limited,**
**IP Section,**
**Building 2,**
**Filton Road**
**Stoke Gifford, Bristol BS34 8QZ (GB)**

(54) **Applying digital watermarks to data files**

(57)    A digital watermark is applied to only a selected section of a data file, such as a digitized image file, to enable a chosen portion of the file within that section to be watermarked on the fly for supply to a customer for evaluation. The size of the selected section is chosen to ensure that it can be effectively watermarked with the chosen watermarking algorithm, and so that a complete image assembled from several portions is also effectively watermarked.

Request for portion of image

Identify parameters of requested portion of image — 40

Identify *wm* rectangle containing requested portion — 42

Retrieve pixel tiles comprising *wm* rectangle from image store — 44

Decompress pixel tiles — 46

Build image buffer — 48

Determine watermark character string — 50

Watermark image buffer with character string — 52

Select pixel tiles for requested portion of image from watermarked image buffer — 54

Compress pixel tiles and output — 56

Fig.3

EP 1 018 833 A2

**Description**

Technical Field

This invention relates to methods and apparatus for applying digital watermarks to data files, for example to indicate ownership of associated intellectual property rights and to enable detection of unauthorised reproduction.

Background Art

The advent and widespread adoption of electronic transmission of data in digital form, especially via the Internet and the World Wide Web, poses a problem for protection and enforcement of intellectual property, and especially copyright. If a work (such as a novel, drawing or photograph) which is recorded in digital form is made available through an electronic medium (e.g. the World Wide Web, or on CD-ROM), it is extremely easy to reproduce and disseminate virtually unlimited, high-quality copies of the work without detection. Although techniques exist for restricting such copying, these are often unpopular with end-users or customers, and indeed may impede legitimate distribution which the intellectual property owner does wish to undertake.

One proposed solution to this problem involves digital watermarking. In this technique, as applied to data files such as image bitmaps or time-sampled waveforms, information is combined with the payload data (i.e. the image or waveform data) to indicate some aspect of the ownership or use of rights in the data. The watermark may be immediately visible as a kind of overlay, to indicate the proprietary nature of the payload data and to deter improper reproduction and use. Alternatively it may involve sufficiently minor and subtle changes to any individual element of the data file that the changes are not readily perceived by a casual observer; such invisible watermarking is useful for tracking use of and proving ownership of rights in proprietary data.

It would be particularly desirable to be able to apply digital watermarking to a data file 'just in time', while the file is being supplied to a legitimate user. This would make possible the incorporation of data identifying the user or transaction individually, and the activities for which that user is permitted to use the data (for example, whether or not they have any right to reproduce the data). However, there is an inexorable trend towards larger and larger data files, for example as the resolution of digitized images and the number of quantization levels for sampled waveforms increase. The time required to apply digital watermarking to a data file is generally proportional to its size, so the trend to lar ge file sizes would result in increasing delays in delivery of files to users if just-in-time watermarking were applied. This deters the adoption of just-in-time and other watermarking techniques.

It is an object of this invention to provide methods and apparatus which at least alleviate this problem.

Disclosure of Invention

According to one aspect of this invention there is provided a method of applying a digital watermark to a chosen portion of a data file, comprising the steps of:

selecting a section of said file to satisfy the following criteria:

- the selected section includes at least said chosen portion of the file;
- the digital watermark can be effectively applied to the selected section; and
- a combination of said digital watermark for said selected section with one or more watermarks for the remainder of the data file results in an effective watermark for the complete data file;

and
applying said digital watermark to said selected section.

According to another aspect of this invention there is provided a method of applying a digital watermark to a chosen portion of a data file, comprising the steps of:

determining a minimum size of data set to which said watermark can be effectively applied;
dividing said file into sections each of said minimum size;
selecting a set of said sections which together include at least said chosen portion of said file; and
applying said digital watermark to each of said selected sections.

According to a still further aspect of the invention there is provided a method of providing a chosen portion of a data file to a requestor, comprising:

receiving information defining a chosen portion of a data file from a requestor;
applying a digital watermark to the chosen portion of the data file as described above; and
providing the watermarked chosen portion of the data file to the requestor.

Brief Description of Drawings

Methods and apparatus in accordance with this invention for performing just-in-time watermarking will now be described, by way of example, with reference to the accompanying drawings, in which:

Figure 1      is a schematic block diagram of apparatus for carrying out just-in-time watermarking;
Figure 2      shows a graphic image; and
Figure 3      is a flow chart showing steps performed in implementing the invention for just-in-time watermarking.

Best Mode for Carrying Out the Invention, & Industrial Applicability

The invention will be described in the context of delivery of watermarked image data files (for example, bitmap files). However, the invention is equally applicable to watermarking of other kinds of data files, such as time-sampled media (audio recordings, video recordings) and any other file or media which can be watermarked by manipulation of data values which are distributed through the body of the file (e.g. the inter-word spacing in text files).

One scenario in which the application is of use is the supply to potential customers of digitised images for which the copyright owners wish to maintain and enforce their copyrights. Typically potential customers wish to view and evaluate images for both visual effect and technical quality before deciding whether to pay a fee to purchase a limited reproduction right in respect of an image. In contrast, in view of the ease and speed with which any digital information can be copied without loss of quality, the copyright owner will wish to ensure that the fee is indeed paid before the potential customer has access to the image. One possibility in this situation is for the owner to supply the potential customer with only a sample version of an image for evaluation (e.g. at a lower-resolution or cropped), or with a complete image which has been combined with a fixed, visible overlay watermark. Upon payment of the specified fee, the full-resolution or full-size, unaltered image is supplied.

However, these solutions do not always suit the customer's requirements. In particular, if the customer wishes to inspect the technical quality of the image to ensure it is adequate for the intended purpose, then neither a reduced-resolution nor an altered version will be suitable; and the customer may wish to inspect a different section of an image from that contained in a cropped version.

An associated problem is that, as image resolution increases image file sizes continue to increase. This problem is accentuated when multiple versions at different resolutions are combined in a single file. Increase in file size leads to increased access time before the customer can view and evaluate an image. Although the delay can be reduced by supplying only a restricted image (e.g. a cropped version or a lower-resolution version), as noted above this may not satisfy the customer's needs. It is possible to allow the customer to choose a portion of an image to be delivered as a full-resolution cropped version, so that the portion of interest can be inspected without excessive delay. However, this approach is vulnerable to the risk that a customer can obtain the full image without charge by making repeated requests for successive adjoining portions of the image. Although this risk could be avoided by applying an invisible digital watermark, existing digital watermarking techniques operate on a complete image. Therefore either a permanent, fixed invisible watermark has to be applied, which may be too inflexible (for example if different levels of reproduction rights are supplied for different fees), or the watermark must be applied when the sample portion is requested, in which case there will still be a delay, possibly prolonged, while the watermark is applied to the complete image prior to extraction of the requested portion.

These problems could be overcome if it were possible to apply a watermark in real time ('just in time') to only a specified portion of a digitised version of an image, but in such a manner that a complete image assembled from several such portions also has an effective watermark associated with it. In this case a watermark specific to the individual customer and transaction could be applied in real time to each requested sample portion of an image, without imposing unacceptable delays on delivery of the sample image to the customer. This specific watermark could, for example, identify the customer and define the permitted uses of the sample image, such as for evaluation during a limited time period. If the sample is then used for other purposes, either alone or in combination with other samples to form the complete image, the fact that such use falls outside the scope of the permission granted would be demonstrable from the watermark.

In this context an 'effective watermark' is one which provides a level of protection for the full image which the rights owner accepts as being close enough to the protection provided by a watermark applied directly to the complete image. For example, the identification provided by the watermark should be robust enough to withstand image transformations such as cropping (i.e. the watermark should be detectable in a section cut out from the originally watermarked image), printing and scanning, image compression, blurring and sharpening.

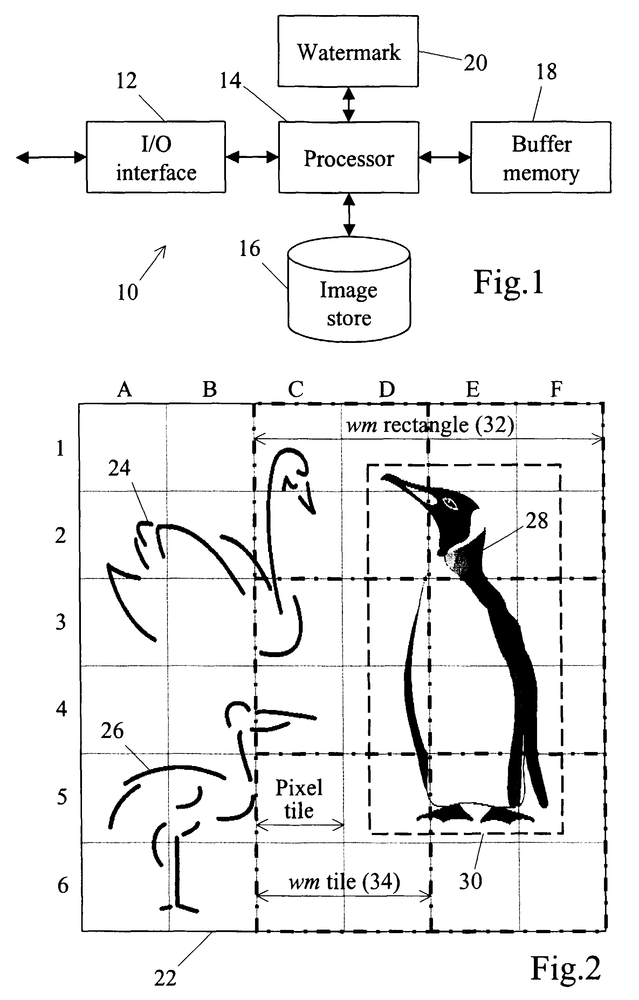

Figure 1 shows apparatus 10 which can be used to implement the present invention to provide just-in-time watermarking of chosen portions of an image. Referring to Figure 1, an input/output (I/O) interface 12 enables the user to identify an image which is required for evaluation and to specify a chosen sample portion. This interface may, for example, receive signals from a graphical user interface (GUI) comprising a display, keyboard and pointing device (such as a mouse or a trackball), coupled to the apparatus 10 either directly or via a communications network; thus, for example, the I/O interface 10 may supply information to control a World Wide Web browser application on the user's display, and interpret signals received via that browser which are indicative of the user's choices.

The interface 12 supplies information it thus derives to a processor 14 which effects image extraction and processing, as described below, in accordance with appropriate software program instructions. To this end the processor 14 can supply identification information to an image store 16 and receive in return the identified images (or portions thereof). The processor has access to a buffer memory 18 for holding image data while they are being manipulated. A watermark generator 20 provides the processor 14 with digital watermark information to be combined with selected image data; this watermark information may comprise bitmap data constituting the actual watermark, and/or a definition of the watermark as a formula, algorithm or the like which can be implemented by the processor to derive the watermark or directly incorporate it into the image.

Figure 2 shows an example image 22 containing several graphical elements depicting a swan 24, a stork 26 and a penguin 28. By way of example, it is assumed that a user has chosen to evaluate the image by examining the penguin element 28 in more detail. In particular the user has drawn a selection rectangle 30 shown in dashed line around the penguin element 28 to specify the chosen portion of the image.

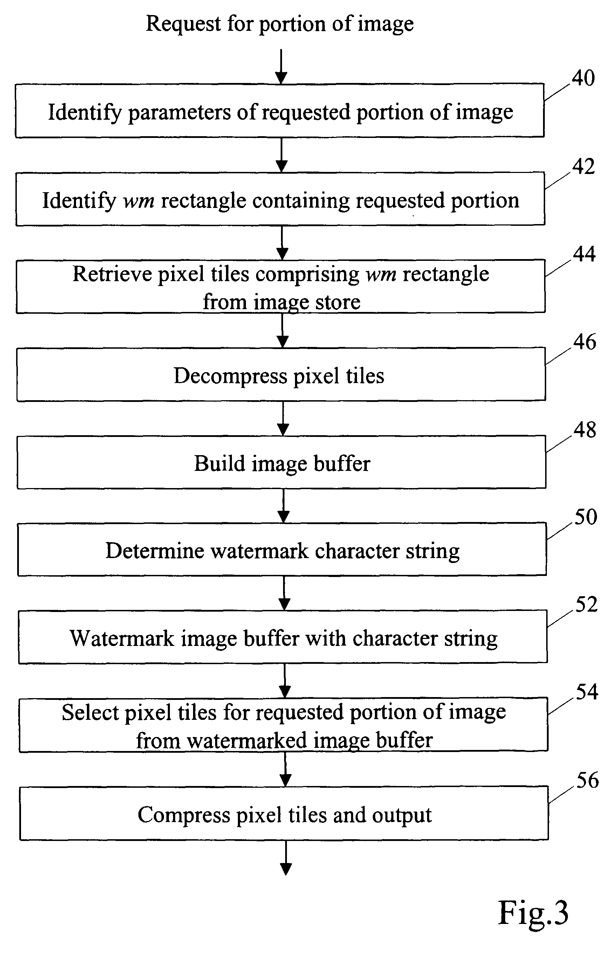

Figure 3 is a flowchart of the procedure implemented by the processor 14 once the request for this portion of the image has been received via the I/O interface 12. At step 40 the procedure identifies parameters specifying the requested portion of the image relative to the whole image, to define the size and position of that portion inside the complete image. For example, the image store 16 may hold the image 22 in the form of multiple rectangular groups or tiles of pixels, as indicated by the indices A to F horizontally and 1 to 6 vertically in Figure 2. In this case the step 40 involves identifying a rectangular part of the overall image, in terms of its component pixel tiles, which fully encompasses the portion 30 of the image requested by the user. In the example shown in Figure 3, this part comprises the pixel tiles having indices D to F horizontally and 1 to 5 vertically; thus the requested rectangle can be identified by the indices of the tiles D1 and F5 containing its upper left and lower right corners respectively.

Step 42 uses these parameters to identify a rectangle 32 (referred to herein as the *wm* rectangle) within the complete image which can be effectively watermarked and which includes the requested image portion. In practice a watermarking algorithm needs to be provided with a certain minimum size of data file in order to provide an effective, robust watermark, especially in the case of invisible watermarking. Thus the *wm* rectangle 32 identified at step 42 must correspond to a data file of at least this minimum size for the watermarking algorithm to be used. In this step the image is therefore notionally considered as comprising sections, referred to herein as *wm* tiles 34, each of which is this minimum size required for effective watermarking using the chosen algorithm, and the *wm* rectangle 32 is assembled from one or more of these tiles 34. The *wm* tiles are not necessarily the same size as the pixel tiles into which the image is divided for the purposes of storage in the image store 16, and generally the *wm* tiles are larger than the pixel tiles. Also the size of the *wm* tiles is dependent on the properties of each individual watermarking algorithm; the invention is not limited to the use of any particular watermarking algorithm, and a choice between different algorithms may be made for different images to be supplied in different situations. Therefore the *wm* tile size applied in step 42, and the associated notional division of the complete image into *wm* tiles, are typically dynamic and determined at the time the procedure is implemented, to suit the algorithm to be used in each case.

In the example shown in Figure 2, each *wm* tile 34 is equal in size to four pixel tiles arranged in a two-by-two square. The *wm* rectangle 32 is assembled to be the smallest rectangle which satisfies two requirements:

- it contains the rectangle 30 requested by the user, and
- it comprises only complete *wm* tiles 34.

For example, the co-ordinates (WMR_UL_x, WMR_UL_y) and (WMR_BR_x, WMR_BR_y), expressed as pixel positions, of the upper left and lower right corners respectively of the wm rectangle can be derived using the following formulae:

$$WMR\_UL\_x = (RR\_UL\_x \text{ div } WM\_TILESIZE\_x) * WM\_TILESIZE\_x$$

$$WMR\_UL\_y = (RR\_UL\_y \text{ div } WM\_TILESIZE\_y) * WM\_TILESIZE\_y$$

$$WMR\_BR\_x = ((RR\_BR\_x \text{ div } WM\_TILESIZE\_x) + 1) * WM\_TILESIZE\_x$$

$$WMR\_BR\_y = ((RR\_BR\_y \text{ div } WM\_TILESIZE\_y) + 1) * WM\_TILESIZE\_y$$

where

(RR_UL_x, RR_UL_y) and (RR_BR_x, RR_BR_y) are the co-ordinates, expressed as pixel positions, of the upper left and lower right corner pixel tiles respectively of the rectangle 30 requested by the user; WM_TILESIZE_x and WM_TILESIZE_y are the horizontal and vertical sizes in pixels of a *wm* tile; and div indicates integer division (i.e. any remainder is discarded).

Referring again to Figure 2, the *wm* rectangle 32 in the illustrated example comprises six *wm* tiles 34 as outlined in bold dash-dot line, comprising a total of 24 pixel tiles extending from tile C1 at the upper left to F6 at the lower right.

Using these co-ordinates, at step 44 the processor 14 retrieves from the image store the pixel tiles which comprise the required *wm* rectangle. For economy of use of storage capacity, these pixel tiles will typically be stored in a compressed form, using for example JPEG compression or other compression as appropriate. Accordingly at step 46 the processor 14 decompresses the pixel tiles to recover the actual image pixel values. These pixel values are written into the buffer memory 18 by the processor 14 at step 48 to assemble the complete image comprising the *wm* rectangle.

At step 50 the procedure determines an actual watermark, visible or invisible, to be applied to the image in the *wm* rectangle. This watermark, for example a character string, may be assembled dynamically to include data such as an identification of the user, the date of the transaction and the permitted uses of the sample image, as well as information indicating the proprietary nature of the image. These data may be represented in the watermark explicitly, or indirectly by reference to a transaction ID which is stored by the processor 14 in a database together with the data about that transaction. This latter option may be necessary if the size of the watermark is limited, as may be the case with an invisible watermark.

The watermark character string is then embedded in the *wm* rectangle image at step 52. To this end the processor 14 interacts with the watermark generator 20, for example supplying it with the watermark character string and portions of the image from the buffer memory 18 and receiving watermarked image data in return. Depending on the watermarking algorithm in use, this step may alternatively involve interacting with a software program module which provides the watermarking functionality, for example via calls to a predefined library of software routines which provide access to the module's internal functions.

The watermarked image data in the buffer memory 18 are then split up into pixel tiles again, at step 54, and the individual tiles comprising the image rectangle 30 specified by the user are selected (in the example, these are the tiles D1 to F5). These tiles are compressed as appropriate before being supplied to the user via the I/O interface 12. By virtue of the selection of portions of the image which are multiples of the *wm* rectangle size, the sample image supplied is effectively watermarked. Equally, if the complete image is assembled from several adjoining such samples, that composite image will also be effectively watermarked. The actual watermarking of the composite image may not be identical to that which would result if the original complete image were watermarked directly, but functionally (i.e. in terms of protecting proprietary rights) there is no difference. Nonetheless, by limiting the watermarking operation to a portion of the image which is smaller than the complete image, any delay in response to the user's request is reduced, possibly below a noticeable duration.

Another use of the invention is in improving the performance and throughput of devices for supplying or recording real-time data which it is desired to watermark. Examples include:

- real-time watermarking of streaming broadcast video;
- real-time watermarking in digital cameras, including providing time-stamping and other information in the output from security cameras;
- real-time watermarking built into a compact disc (CD) or digital versatile disc (DVD) writer, to trace machines used to create copy discs.

In these cases the throughput can be increased by watermarking different portions of the image or other data in parallel, using the invention to watermark each individual portion. If *n* component non-overlapping portions make up the complete image and they are watermarked all at once, the time taken to watermark a complete image, for example, is reduced by a factor of *n*.

As noted above, the size of the *wm* rectangle 32 depends on the characteristics of the watermarking algorithm to be used. Investigation has shown that a *wm* tile size of 256 x 256 pixels is useful and effective for several different watermarking algorithms. For a specific watermarking algorithm it is possible to determine an appropriate *wm* tile size by comparing the result of watermarking a complete image with the result of watermarking portions of the image of different sizes. Specifically, the image is notionally divided into rectangular portions, the watermark is applied to each portion independently, and a composite watermarked image is assembled from these portions. Then an attempt is made to detect the watermark within a test subsection of the composite image, for each of multiple positions of the test subsection within the overall image, and the number of test positions where the watermark is detected is counted. A similar detection and counting process is performed for the same size test subsection applied to the complete image watermarked as a whole. This test procedure is repeated for different sizes of rectangular portion making up the composite image, and the counts of successful detections of the watermark in the composite and complete images are compared for each size. A choice is made among these sizes for the *wm* tile size, based on a balance between minimizing the *wm* tile size and matching the counts of successful detections for the composite and complete images as closely as possible.

**Claims**

1. A method of applying a digital watermark to a chosen portion of a data file, comprising the steps of:

   selecting a section (32) of said file to satisfy the following criteria:

   - the selected section includes at least said chosen portion (30) of the file;
   - the digital watermark can be effectively applied to the selected section; and
   - a combination of said digital watermark for said selected section with one or more watermarks for the remainder of the data file results in an effective watermark for the complete data file;

   and
   applying said digital watermark to said selected section.

2. The method of claim 1, wherein a minimum size (34) for said selected section of said file is determined to satisfy the criterion that the digital watermark can be effectively applied to the selected section.

3. The method of claim 2, wherein the size of said selected section is an integer multiple of said minimum size.

4. The method of any one of the preceding claims, wherein the selected section is assembled from parts into which the data file has been divided for storage purposes.

5. The method of any one of the preceding claims, wherein the said selected section is larger than said chosen portion, and only part of the watermarked selected section corresponding to the chosen portion is retained for use.

6. A method of applying a digital watermark to a chosen portion of a data file, comprising the steps of:

   determining a minimum size of data set to which said watermark can be effectively applied;
   dividing said file into sections each of said minimum size;
   selecting a set of said sections which together include at least said selected portion of said file; and
   applying said digital watermark to each of said selected sections.

7. The method of any one of the preceding claims, wherein the watermark includes an identification of a customer to whom the chosen portion is to be supplied.

8. The method of any one of the preceding claims, wherein the watermark includes an identification of a transaction involving transfer of said chosen portion.

9. The method of any one of the preceding claims, wherein said data file represents an image, a video recording or a sound recording.

10. A method of providing a chosen portion of a data file to a requestor, comprising:

receiving information defining a chosen portion of a data file from a requestor;
applying a digital watermark to the chosen portion of the data file as claimed in any preceding claim; and
providing the watermarked chosen portion of the data file to the requestor.

Watermark 20

12 14 18

I/O interface ◄► Processor ◄► Buffer memory

10 16

Image store

Fig.1

A B C D E F

*wm* rectangle (32)

1

24

2

28

3

4

26

5

Pixel tile

30

6

*wm* tile (34)

22

Fig.2

Request for portion of image

Identify parameters of requested portion of image /40

Identify *wm* rectangle containing requested portion /42

Retrieve pixel tiles comprising *wm* rectangle from image store /44

Decompress pixel tiles /46

Build image buffer /48

Determine watermark character string /50

Watermark image buffer with character string /52

Select pixel tiles for requested portion of image from watermarked image buffer /54

Compress pixel tiles and output /56

Fig.3